(19) Europäisches Patentamt

European Patent Office

Office européen des brevets

(11) **EP 0 486 963 B1**

(12) **EUROPÄISCHE PATENTSCHRIFT**

(45) Veröffentlichungstag und Bekanntmachung des Hinweises auf die Patenterteilung:
**01.05.1996 Patentblatt 1996/18**

(51) Int Cl.6: **F02B 19/00**, F02B 19/04

(21) Anmeldenummer: **91119519.6**

(22) Anmeldetag: **15.11.1991**

(54) **Verbrennungskraftmaschine mit mehreren Verdichtungsräumen**

Combustion engine with a plurality of combustion chambers

Moteur à combustion ayant plusieurs chambres de combustion

(84) Benannte Vertragsstaaten:
**AT CH DE DK ES FR GB IT LI NL**

(30) Priorität: **22.11.1990 DE 4037185**

(43) Veröffentlichungstag der Anmeldung:
**27.05.1992 Patentblatt 1992/22**

(73) Patentinhaber: **Kueckenwaitz, Hugo**
**D-89551 Königsbronn (DE)**

(72) Erfinder: **Kueckenwaitz, Hugo**
**D-89551 Königsbronn (DE)**

(74) Vertreter: **Lorenz, Werner, Dipl.-Ing. et al**
**Lorenz & Gordon,**
**Fasanenstrasse 7**
**D-89522 Heidenheim (DE)**

(56) Entgegenhaltungen:
EP-A- 0 145 796      EP-A- 0 341 938
EP-A- 0 351 438      EP-A- 0 395 406
WO-A- 88/00281       FR-A- 758 784
FR-A- 2 256 312      FR-A- 2 266 801

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein Verfahren zur Erzielung eines möglichst hohen Wirkungsgrades, durch angenäherte Idealisierung eines Kreisprozesses, bei Wärmekraftmaschinen, mit einem Kolben und einem Verdichtungsraum, wobei je nach Lage des Kolbens der Verdichtungsraum in erste, über dem Kolben liegende Räume ($V_D$, $V_d$, $V_D + V_d$) und in zweite, durch den Kolben in Schließstellung von den ersten Räumen separierte, Räume ($V_R$, $V_r$) aufgeteilt ist, und in diesen Räumen ein oder mehrere Kreisprozesse teilweise separat ablaufen.

Bei bekannten Kreisprozessen, wie beispielsweise dem Otto-Verfahren und dem Diesel-Verfahren, ist es notwendig, unterschiedliche Kraftstoffe einzusetzen, um ein Durchführen der genannten Kreisprozesse zu ermöglichen.

Da verschiedene Brennstoffe verschiedene Verdichtungsgrade verlangen - wobei Begriffe wie "Klopfen" bzw. "Klingeln" Grenzen setzen - können die genannten Kreisprozesse nicht immer nur in ihren optimalen Bereichen gefahren werden, so daß der Gesamtwirkungsgrad der einzelnen Kreisprozesse verhältnismässig schlecht ist.

Aus der WO-A-8800281 ist eine Kolbenmaschine bekannt, welche einen separaten Hohlraum aufweist, welcher im Bereich des Zylinderkopfes der Maschine um jeden einzelnen Zylinder herum verläuft. Über eine Anzahl von Öffnungen ist eine Verbindung zwischen dem Hohlraum und der Brennkammer des Zylinders vorgesehen, wobei die Öffnungen durch den Kolben geöffnet und verschlossen werden, und ein Teil des Abgases in den Hohlraum gedrückt und während des Verdichtungstaktes dort gehalten wird. Bei der nachfolgenden Zündung ist der Arbeitstakt in zwei Bereiche aufgeteilt:

Einen ersten Verbrennungsbereich, bei dem die Öffnungen von dem Kolben verschlossen sind, wonach sich ein zweiter Verbrennungsbereich anschließt, bei welchem die Öffnungen von dem sich nach unten bewegenden Kolben geöffnet werden und somit eine Verbindung zwischen dem Brennraum und dem Hohlraum hergestellt wird.

Der vorliegenden Erfindung liegt daher die Aufgabe zugrunde, die beschriebenen Nachteile des Standes der Technik zu beseitigen, insbesondere ein Verfahren zur Erzielung eines möglichst hohen Wirkungsgrades bei Wärmekraftmaschinen vorzusehen, welches unabhängig vom verwendeten Brennstoff ist.

Erfindungsgemäß wird diese Aufgabe durch die im Anspruch 1 genannten Merkmale gelöst.

Im Gegensatz zu bekannten "Unterteilungen" des Zylinders bzw. des Brennraumes, wie Vorkammerverfahren, Wirbelkammerverfahren und Luftspeicherverfahren, welche alle axial auf den Kolben wirken, ist bei der vorliegenden Erfindung ein geschlossener Raum vorgesehen, welcher beispielsweise während der Fremd- oder Selbstzündung gegenüber dem Brennraum abgeschlossen ist.

Da je nach Lage des separaten Raumes zur Zeit der sehr hohen "Zündungsdruckspitzen" keine Auswirkungen auf das Triebwerk zu befürchten sind, spielt der Verdichtungsgrad der Wärmekraftmaschine keine Rolle. Der Verdichtungsgrad wirkt sich jedoch enorm auf den thermischen Wirkungsgrad, z. B. auf die Formel für adiabatische Verdichtung (Gleichraumprozeß), aus:

$$\eta\text{th} = 1 - \varepsilon^{1-1,4}$$

Für die Adiabate wurde der Wert 1,4 gewählt.

Vorteilhafte Ausgestaltungen und Weiterbildungen der Erfindung ergeben sich aus den Unteransprüchen sowie aus den nachfolgend anhand der Zeichnung beschriebenen Ausführungsbeispielen.

Es zeigt:

Fig. 1    schematisch ein erstes Ausführungsbeispiel der vorliegenden Erfindung;

Fig. 2    schematisch ein zweites Ausführungsbeispiel der vorliegenden Erfindung;

Fig. 3    schematisch eine Kombination der Ausführungsbeispiele nach den Fig. 1 und 2;

Fig. 4    ein p-V Diagramm für das Ausführungsbeispiel nach der Fig. 3, und

Fig. 5    einen Schnitt entlang der Linie A-B der Fig. 1.

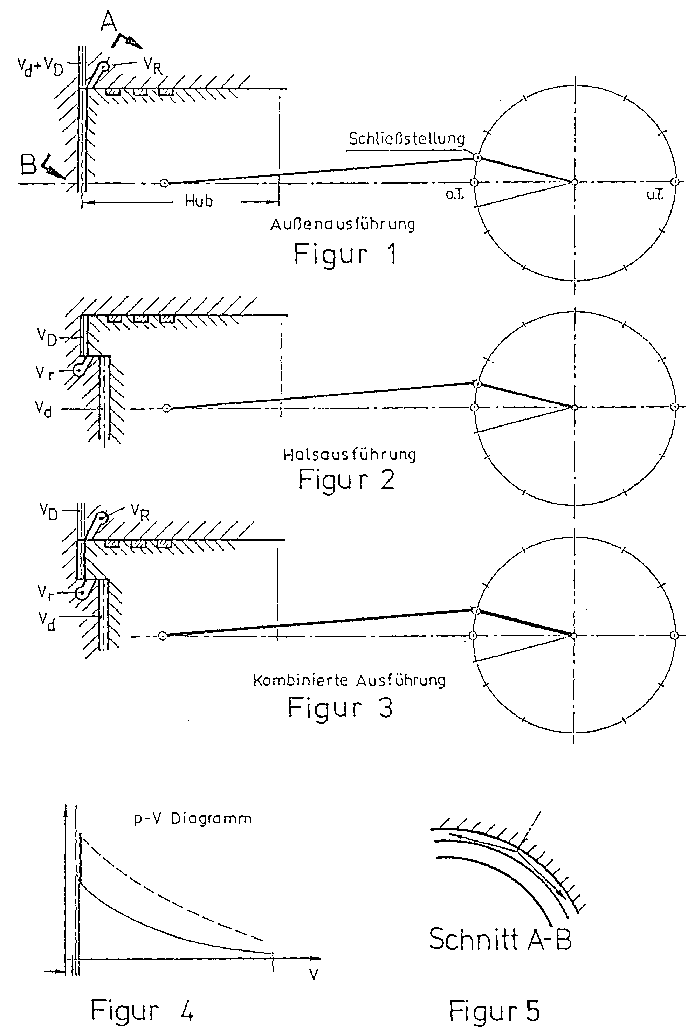

Beim "Aufwärtsgang" des Kolbens strömt in die vorzugsweise in der Nähe des "oberen Totpunktes" des Kolbens eines Zylinders einer Wärmekraftmaschine angebrachten Räume (wahlweise: $V_R$ - Figur 1 - entsprechend Außenausführung. $V_r$ - Figur 2 - entsprechend Halsausführung oder $V_R$ und $V_r$ - Figur 3 - entsprechend kombinierter Ausführung) die hochverdichtete Luft oder das Brennstoff-Luft-Gemisch. In diesem Raum bzw. Räumen steigt je nach Verdichtungsgrad die Temperatur sehr hoch an und bildet je nach Ausbildung des Raumes oder Räume eine mehr oder weniger temperaturhaltende Glühkammer.

EP 0 486 963 B1

$$\text{Formel:} \quad \boxed{t = (273 + t_L) * \varepsilon^{1,4-1} - 273}$$

Für die Adiabate wurde der Wert 1,4 gewählt.

Bei Weitergang des Kolbens und - je nach Lage - Schließung der jetzt separierten Räume entstehen so günstige Voraussetzungen für eine gute Verbrennung (bei Einspritzung des gewählten Brennstoffes - z. B. Figur 5 - bzw. Gemischaufbereitung und Zündung). Die direkt über dem Kolben liegenden Räume ($V_D$, $V_d$ und $V_D + V_d$ - Figur 1 bis Figur 3 -) können wahlweise, was allerdings bei Vergasermotoren nicht möglich ist, als Luftspeicher dienen, oder zusätzlich mit Brennstoff beschickt werden (Verdichtung! - Klopfen!).

Beim Abwärtsgang des Kolbens (für "Hauptbrennraum" - Prozentanteil groß - bestand genügend Zeit für Verbrennung) strömen nun unter hohem Druck die Gase über die Wirkfläche des Kolbens und vermischen sich unter starker Verwirbelung mit den Gasen des anderen Raumes. Durch eine geschickte Gestaltung des Verdichtungsraumes bzw. Positionierung in Bezug auf den Kurbelwinkel ergibt sich für einen gewissen Anteil ein sogenannter Gleichraumprozeß (siehe p-V Diagramm Figur 4).

Diese "Idealisierung", die soweit möglich eine gezielte Verdichtungsgrad-Erhöhung ("Klopfen" ausgeschlossen, da geschlossener Raum und daher keine Wirkungen auf Triebwerk) darstellt, und eine anschließende gute Verwirbelung des Luft-Brennstoff-Gemisches bringen eine gute Verbrennung bzw. Wirkungsgradverbesserung mit sich. Die bestimmte Konfiguration schafft auch gute Anlaßbedingungen für den Motor. Letztendlich aber wird durch beide Verbesserungen eine niedrigere Umweltbelastung erzielt.

**Patentansprüche**

1. Verfahren zur Erzielung eines möglichst hohen Wirkungsgrades, durch angenäherte Idealisierung eines Kreisprozesses, bei Wärmekraftmaschinen, mit einem Kolben und einem Verdichtungsraum, wobei je nach Lage des Kolbens der Verdichtungsraum in ersten über dem Kolben liegenden Räumen ($V_D$, $V_d$, $V_D + V_d$) und in zweiten durch den Kolben in Schließstellung von den ersten Räumen separierten Räumen ($V_R$, $V_r$) aufgeteilt ist, und in diesen Räumen ein oder mehrere Kreisprozesse teilweise separat ablaufen,

   **dadurch gekennzeichnet**, daß in den radial wirkenden, separierten Räumen eine wirkliche Gleichraumverbrennung stattfindet, und daß durch eine bestimmte Anordnung der separierten Räume zur Zeit der sehr hohen Zündungsdruckspitzen keine Auswirkungen auf die Wärmekraftmaschine bestehen, d.h. daß über einen bestimmten Kurbelwinkelbereich die großen Kräfte nur radial wirken.

2. Verfahren nach Anspruch 1,
   **dadurch gekennzeichnet**, daß die radial wirkenden separierten Räume mit von Diesel-Brennkraftmaschinen bekannten Verdichtungsgraden betrieben werden.

3. Verfahren nach Anspruch 1 und 2,
   **dadurch gekennzeichnet**, daß der Motor teilweise oder ganz, selbst bei "überhöhtem" Verdichtungsgrad mit nichtklopffestem Brennstoff betrieben werden kann.

4. Verfahren nach Anspruch 1 bis 3,
   **dadurch gekennzeichnet**, daß durch die oben aufgeführten Punkte gute Anlaßbedingungen geschafft werden, und daß eine ständig direkt wirkende Kammer als Luftspeicher einsetzbar ist.

5. Verfahren nach Anspruch 1 bis 4,
   **dadurch gekennzeichnet**, daß die verschiedenen Kammern mit unterschiedlichen Brennstoffen, z.B. Benzin/Diesel, betrieben werden.

6. Verfahren nach Anspruch 1 bis 5,
   **dadurch gekennzeichnet**, daß die Zündung des eingespritzten Brennstoffes durch Selbstzündung erfolgt.

**Claims**

1. Method of obtaining the highest possible efficiency by the approximate idealisation of a cycle process in heat

3

engines comprising a piston and a compression space, in which, depending on the position of the piston, the compression space is divided into first spaces ($V_D$, $V_d$, $V_D + V_d$) situated above the piston and second spaces ($V_R$, $V_r$) separated from the first spaces by the piston in the closed position, and one or more cyclic processes take place partially separately in these spaces, characterised in that actual constant-volume combustion takes place in the radially acting separated spaces and that there is no adverse effect on the heat engine at very high peak ignition pressures as a result of a specific arrangement of the separated spaces, i.e. the greatest forces only act radially over a specific crank angle range.

2. Method according to claim 1, characterised in that the radially acting separated spaces are operated with degrees of compression known from diesel internal combustion engines.

3. Method according to claims 1 and 2, characterised in that the engine can be operated partially or completely with non-knockproof fuel, even in the case of an "excess" degree of compression.

4. Method according to claims 1 to 3, characterised in that good starting conditions are achieved as a result of the points described hereinabove and that a continuously direct-acting chamber can be used as an air cell.

5. Method according to claims 1 to 4, characterised in that the different chambers are operated with different fuels, e.g. petrol/diesel.

6. Method according to claims 1 to 5, characterised in that the fuel injected is ignited by self-ignition.

**Revendications**

1. Procédé pour atteindre un rendement élevé, par optimisation d'un cycle de fonctionnement, dans un moteur à combustion, comportant un piston et une chambre de combustion, dans lequel, selon la position du piston, la chambre de combustion est divisée en premières chambres ($V_D$, $V_d$, $V_D + V_d$) disposées au-dessus du piston et en deuxièmes chambres ($V_R$, $V_r$) séparées des premières chambres et délimitées par le piston en position de fermeture, et dans lequel un ou plusieurs cycles de fonctionnement se déroulent partiellement individuellement dans ces chambres,
**caractérisé en ce que** dans les chambres séparées à effet radial se déroule une combustion effective à volume constant, et en ce que, par une disposition appropriée des chambres séparées, le pic de pression d'allumage momentanément très élevé n'a aucune influence sur le moteur à combustion, ce qui signifie que pour un secteur angulaire donné du vilebrequin, les grandes forces n'agissent que radialement.

2. Procédé selon la revendication 1,
**caractérisé en ce que** les chambres séparées à effet radial sont alimentées avec des combustibles à taux de compression connus pour des moteurs à combustion interne du type diesel.

3. Procédé selon les revendications 1 et 2,
**caractérisé en ce que** le moteur peut être entièrement ou partiellement alimenté avec du combustible non antidétonant même pour des taux de compression exagérément élevés.

4. Procédé selon les revendications 1 à 3,
**caractérisé en ce que** des conditions de démarrage avantageuses sont atteintes grâce aux spécificités mentionnées ci-dessus, et en ce qu'une des chambres peut être utilisée en permanence comme réservoir d'air.

5. Procédé selon les revendications 1 à 4,
**caractérisé en ce que** les differentes chambres sont alimentées par des combustibles différents, par exemple essence/gazoline.

6. Procédé selon les revendications 1 à 5,
**caractérisé en ce que** l'allumage du combustible injecté s'effectue par auto-allumage.

Figur 1
Außenausführung

Figur 2
Halsausführung

Figur 3
Kombinierte Ausführung

Figur 4
p-V Diagramm

Figur 5
Schnitt A-B